# EUROPEAN PATENT SPECIFICATION

(11) **EP 4 113 021 B1**
(45) Date of publication and mention of the grant of the patent: **28.02.2024**
(21) Application number: 20920856.0
(22) Date of filing: 26.02.2020
(51) Int. Cl.: F24F 1/38, F24F 1/56, H02K 1/2706, H02K 1/274, H02K 21/16

(54) **OUTDOOR UNIT AND AIR-CONDITIONING DEVICE**
AUSSENEINHEIT UND KLIMAANLAGENVORRICHTUNG
UNITÉ EXTÉRIEURE ET DISPOSITIF DE CLIMATISATION

(43) Date of publication of application: 04.01.2023
(60) Divisional application: 23216195.0
(73) Proprietor: MITSUBISHI ELECTRIC CORPORATION, Chiyoda-ku Tokyo 100-8310 (JP)
(72) Inventor: TSUCHIDA, Kazuchika, Tokyo 100-8310 (JP); ASO, Hiroki, Tokyo 100-8310 (JP); SHIMOKAWA, Takaya, Tokyo 100-8310 (JP); TAKAHASHI, Ryogo, Tokyo 100-8310 (JP); MORISHITA, Daisuke, Tokyo 100-8310 (JP)
(74) Representative: Pfenning, Meinig & Partner mbB
(86) International application number: PCT/JP2020/007841
(87) International publication number: WO 2021/171437

(56) References cited:
- EP-A2- 2 206 976
- WO-A1-2018/158930
- WO-A1-2018/179025
- GB-A- 2 562 980
- GB-A- 2 566 837
- JP-A- 2003 148 771
- JP-A- 2007 093 048
- JP-A- 2012 013 390
- JP-A- 2013 231 530
- US-A1- 2019 319 509

## Description

### TECHNICAL FIELD

The present invention relates to an outdoor unit and an air conditioner.

### BACKGROUND ART

An outdoor unit has a fan and a unit housing in which the fan is housed. The fan has a rotating blade and a motor to rotate the rotating blade. Some motors have a consequent pole rotor that includes a magnet magnetic pole formed by a permanent magnet and a virtual magnetic pole formed by a rotor core (see, for example, Patent Reference 1). Furthermore, JP-A-2013231530 discloses an outdoor unit with a motor, a frame holding the motor, a support body supporting the frame, and a housing in which the frame and the support body are housed, the housing comprising a top plate, a bottom plate and side plates. An elastic member is disposed between the support body and the top plate

### PRIOR ART REFERENCE

### PATENT REFERENCE

Patent Reference 1: International Publication WO2018/ 179025 (see FIGS. 1 and 2)

### SUMMARY OF THE INVENTION

### PROBLEM TO BE SOLVED BY THE INVENTION

In the consequent pole rotor, since the virtual magnetic pole has no permanent magnet, part of the magnetic flux exiting from the magnet magnetic pole is likely to flow to the shaft. The magnetic flux flowing to the shaft may further flow to a unit housing via a support body supporting the fan, and may leak to the outside of the outdoor unit.

The leakage of the magnetic flux to the outside of the outdoor unit may affect peripheral components of the outdoor unit. In addition, in order to meet the International Air Transport Association (IATA) standards, it is required to suppress magnetic flux leakage to the outside of the outdoor unit.

The present invention is intended to solve the above-described problem, and an object of the present invention is to suppress magnetic flux leakage to the outside of an outdoor unit.

### MEANS OF SOLVING THE PROBLEM

The invention is defined in the claims. An outdoor unit of the present invention includes a motor. The motor includes a rotor having a rotor core and a permanent magnet attached to the rotor core, the permanent magnet forming a magnet magnetic pole, a part of the rotor core forming a virtual magnetic pole, and a stator surrounding the rotor. The outdoor unit further includes a frame holding the motor, a support body supporting the frame, and a unit housing in which the frame and the support body are housed. The unit housing has a top plate located above the frame, a bottom portion located under the frame, and a side plate. A nonmagnetic body is disposed between the support body and the top plate. A nonmagnetic body is further disposed at least one of between the support body and the bottom portion, between the side plate and the top plate and between the side plate and the bottom portion.

### EFFECTS OF THE INVENTION

According to the present invention, magnetic flux leakage to the outside of the outdoor unit can be suppressed because the nonmagnetic body is disposed between the support body and the unit housing.

### BRIEF DESCRIPTION OF THE DRAWINGS

FIG. 1 is a longitudinal-sectional view illustrating an outdoor unit of a first embodiment of the invention.
FIG. 2 is a cross-sectional view illustrating the outdoor unit of the first embodiment.
FIG. 3 is a longitudinal-sectional view illustrating a fan of the first embodiment.
FIG. 4 is a cross-sectional view illustrating a motor of the first embodiment.
FIG. 5 is a cross-sectional view illustrating a rotor of the first embodiment.
FIG. 6 is a graph illustrating the magnetic flux distribution on the surface of the rotor of the first embodiment.
FIG. 7 is a schematic diagram illustrating the flow of leakage magnetic flux in the outdoor unit of the first embodiment.
FIG. 8 is a schematic diagram illustrating the flow of leakage magnetic flux in the outdoor unit of the first embodiment.
FIG. 9 is an enlarged sectional view illustrating an upper part of the outdoor unit of the first embodiment.
FIG. 10 is a longitudinal-sectional view illustrating an outdoor unit of a second embodiment of the invention.
FIG. 11 is a cross-sectional view illustrating the outdoor unit of the second embodiment.
FIG. 12 is a diagram illustrating an air conditioner to which the outdoor unit of each embodiment is applicable.

### MODE FOR CARRYING OUT THE INVENTION

### FIRST EMBODIMENT

### (Configuration of Outdoor Unit)

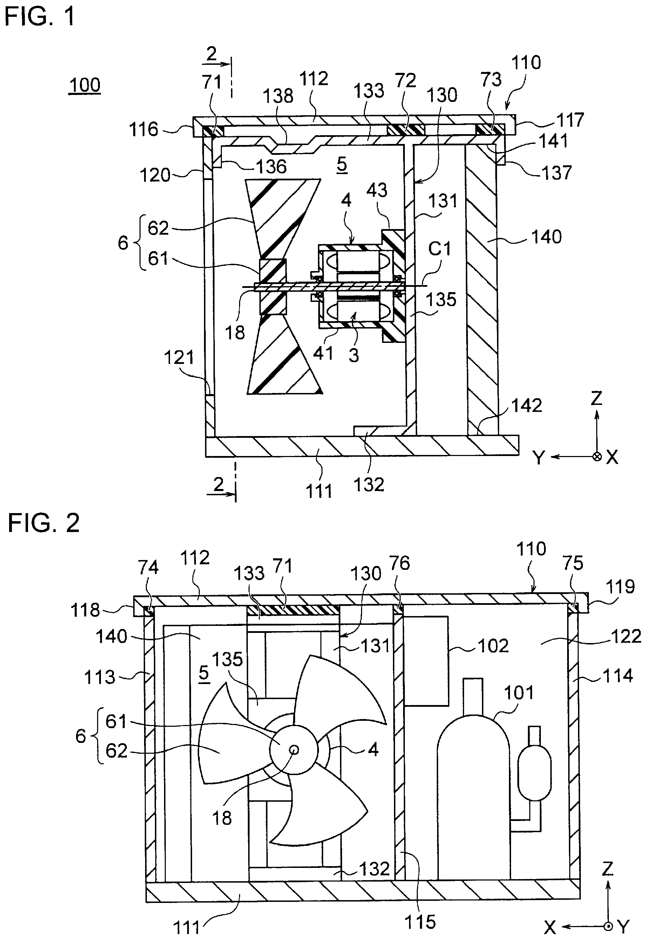

An outdoor unit 100 of a first embodiment will be described. FIG. 1 is a longitudinal-sectional view illustrating the outdoor unit 100 of the first embodiment. The outdoor unit 100 constitutes a part of an air conditioner such as a room air conditioner.

As illustrated in FIG. 1, the outdoor unit 100 has a unit housing 110 which is an outer frame, a fan 5 disposed inside the unit housing 110, a support body 130 that supports the fan 5, a front panel 120 disposed at the front side of the unit housing 110, and a heat exchanger 140 disposed at the back side of the unit housing 110.

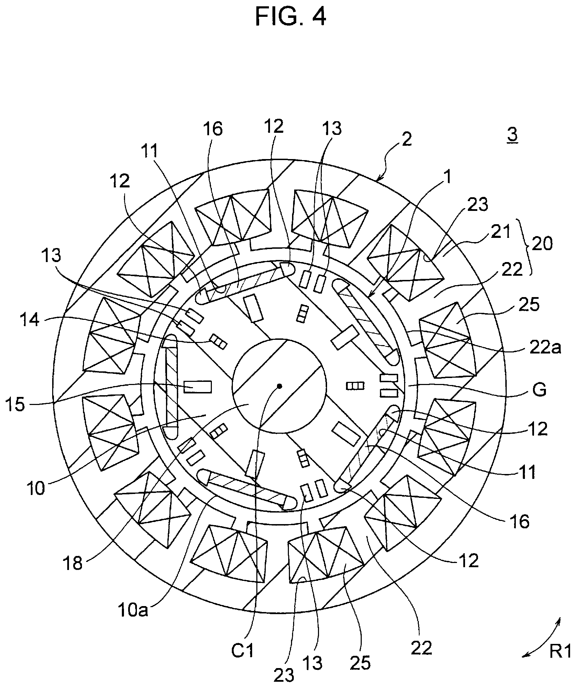

The direction of an axis C1, which is a rotation center axis of a motor 3 (to be described later) of the fan 5, is referred to as an "axial direction". The circumferential direction about the axis C1 is referred to as a "circumferential direction" and indicated by the arrow R1 in FIG. 4 and other figures. The radial direction about the axis C1 is referred to as a "radial direction". A sectional view in a plane parallel to the axial direction is referred to as a "longitudinal-sectional view". A sectional view in a plane orthogonal to the axial direction is referred to as a "cross-sectional view".

The outdoor unit 100 is placed on a horizontal plane in this example. The horizontal plane is an XY plane, and the vertical direction is a Z direction. A Y direction is parallel to the axial direction and is the front-back direction of the outdoor unit 100.

FIG. 2 is a cross-sectional view of the outdoor unit 100 taken along the line 2-2 illustrated in FIG. 1. As illustrated in FIG. 2, the unit housing 110 has a bottom plate 111, a top plate 112, and side plates 113 and 114. Each of the bottom plate 111, the top plate 112, and the side plates 113 and 114 is formed of, for example, a metal sheet. The material for the metal sheet is, for example, iron, stainless steel, or the like.

The fan 5 and other components are disposed in an area enclosed by the bottom plate 111, the top plate 112, and the side plates 113 and 114. The top plate 112 covers an upper part of the area in which the fan 5 and the other components are disposed, while the side plates 113 and 114 cover both sides in the X direction, i.e., both left and right sides, of the area.

The front panel 120 (FIG. 1) is formed of, for example, a metal sheet, and fixed to the bottom plate 111 by screws. An opening 121 is formed in the front panel 120, and a not-shown grille is fitted to the opening 121. The grille is composed of a plurality of iron wires which are combined in a grid pattern. The opening 121 is a part through which an airflow generated by the fan 5 passes.

The support body 130 has a pillar 131 extending in the Z direction, a pedestal portion 132 formed at a lower end of the pillar 131, and an arm portion 133 extending back and forth from an upper end of the pillar 131. The support body 130 is formed of, for example, a metal sheet. The pedestal portion 132 is fixed to the bottom plate 111 by screws.

The pillar 131 has a pair of columnar portions disposed with a space therebetween in the X direction. A mounting plate 135 (FIG. 2) is formed at the center of the pair of columnar portions in the Z direction. A frame 41 of the fan 5 is fixed to the mounting plate 135, as described below.

As illustrated in FIG. 1, the arm portion 133 supports the top plate 112 from below via nonmagnetic bodies 71, 72, and 73 described below. A front end of the arm portion 133 has a fixing portion 136 formed to be bent downward, and an upper end of the front panel 120 is fixed to the fixing portion 136 by screws. A back end of the arm portion 133 has a fixing portion 137 formed to be bent downward, and an upper end of the heat exchanger 140 is fixed to the fixing portion 137 by screws. That is, the arm portion 133 holds the upper ends of the front panel 120 and the heat exchanger 140.

The back side of the unit housing 110 is open, and the heat exchanger 140 is disposed at the back side of the unit housing 110. The heat exchanger 140 has a plurality of fins which are elongated in the Z direction and arranged in the X direction, and heat transfer pipes each of which passes through the plurality of fins. A gap is formed between fins adjacent to each other in the X direction. The fin is formed of, for example, aluminum, and the heat transfer pipe is formed of, for example, copper.

The heat exchanger 140 extends in the X direction along the back side of the unit housing 110 and further extends in the Y direction along the side plate 113. That is, the heat exchanger 140 has an L shape as viewed from the above.

Heat exchange is carried out between a refrigerant flowing in the heat exchanger 140 and air passing through the heat exchanger 140. In this regard, the width of the above-described support body 130 in the X direction is set narrower than the width of the heat exchanger 140 in the X direction so as not to obstruct the airflow passing through the heat exchanger 140.

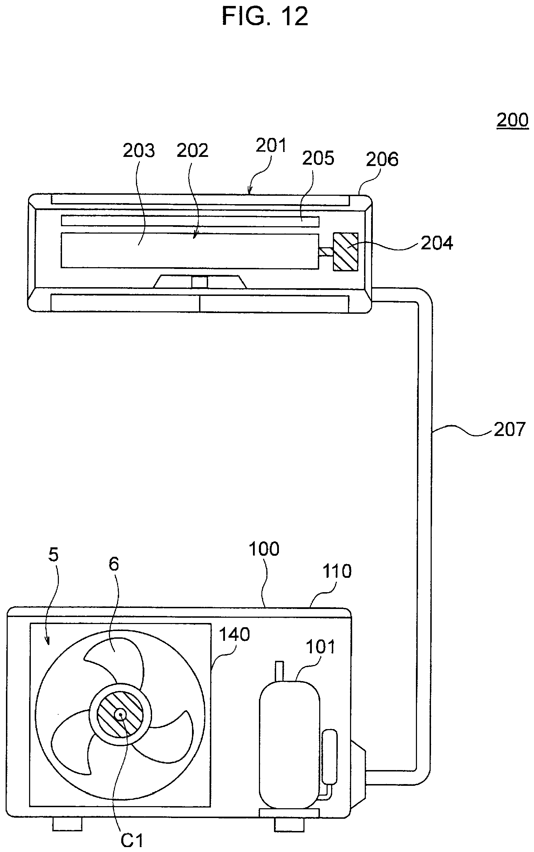

As illustrated in FIG. 2, a compressor 101 is further disposed in the unit housing 110. The compressor 101 is disposed adjacent to the fan 5 in the X direction, i.e., on the right side of the fan 5 in FIG. 2. The compressor 101 is fixed to the bottom plate 111 by screws. The compressor 101, the heat exchanger 140, a heat exchanger 205 (FIG. 12) of an indoor unit 201, and the like constitute a refrigerant circuit.

A partition plate 115 as a partition member is formed between the fan 5 and the compressor 101. The partition plate 115 is parallel to the side plates 113 and 114 and is fixed to the bottom plate 111. The fan 5 is disposed between the partition plate 115 and the side plate 113, and the compressor 101 is disposed between the partition plate 115 and the side plate 114.

The back side of the unit housing 110 is open, while a back plate 122 is disposed on the back side of an area in which the compressor 101 is disposed. A control board 102 for controlling the outdoor unit 100 is disposed between the partition plate 115 and the side plate 114.

### (Configuration to Suppress Magnetic Flux Leakage)

Next, the configuration to suppress magnetic flux leakage to the outside of the outdoor unit 100 will be described. As illustrated in FIG. 1, the nonmagnetic bodies 71, 72, and 73 are disposed between the arm portion 133 of the support body 130 and the top plate 112.

The nonmagnetic body 71 is disposed to straddle the front end of the arm portion 133 and the upper end of the front panel 120. The nonmagnetic body 73 is disposed at the back end of the arm portion 133. The nonmagnetic body 72 is disposed on the arm portion 133 at a position above the pillar 131 in the vertical direction.

In other words, the support body 130 supports the top plate 112 via the nonmagnetic bodies 71, 72, and 73. In this example, each of the nonmagnetic bodies 71, 72, and 73 is formed of, for example, a resin, more specifically urethane resin. Each of the nonmagnetic bodies 71, 72, and 73 may be in the form of a sponge.

The nonmagnetic bodies 71, 72, and 73 have the effect of suppressing magnetic flux leakage to the top plate 112. It is sufficient that each of the nonmagnetic bodies 71, 72, and 73 has a thickness enough to exhibit the effect of suppressing magnetic flux leakage.

In this example, the width of each of the nonmagnetic bodies 71, 72, and 73 in the X direction is the same as the width of the support body 130 in the X direction. In this regard, the width of each of the nonmagnetic bodies 71, 72, and 73 in the X direction may be wider or narrower than the width of the support body 130 in the X direction.

As illustrated in FIG. 2, a nonmagnetic body 74 is disposed between an upper end of the side plate 113 and the top plate 112. It is sufficient that the nonmagnetic body 74 is disposed at least at one location in the Y direction along the upper end of the side plate 113.

Similarly, a nonmagnetic body 75 is disposed between an upper end of the side plate 114 and the top plate 112. It is sufficient that the nonmagnetic body 75 is disposed at least at one location in the Y direction along the upper end of the side plate 114.

A nonmagnetic body 76 is disposed between an upper end of the partition plate 115 and the top plate 112. It is sufficient that the nonmagnetic body 76 is disposed at least at one location in the Y direction along the upper end of the partition plate 115.

That is, the side plates 113 and 114 and the partition plate 115 support the top plate 112 via the nonmagnetic bodies 74, 75, and 76. Each of the nonmagnetic bodies 74, 75, and 76 is formed of a nonmagnetic material, as is the case with the nonmagnetic bodies 71, 72, and 73. Examples of the nonmagnetic material are as described above.

### (Configuration of Fan)

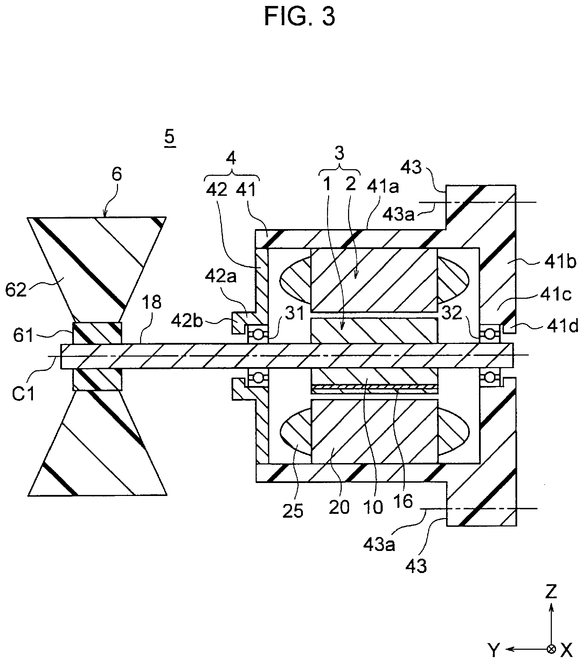

FIG. 3 is a longitudinal-sectional view illustrating the fan 5. The fan 5 includes the motor 3, a motor housing 4 in which the motor 3 is housed, and a rotating blade 6 fixed to a shaft 18 of the motor 3. The motor 3 includes a rotor 1 having the shaft 18 and a stator 2 surrounding the rotor 1 from outside in the radial direction. The center axis of the shaft 18 is the axis C1 described above. In the direction of the axis C1, the side on which the rotating blade 6 is provided is the front side.

The motor housing 4 has a bottomed cylindrical frame 41 having an opening at its front and a bearing support plate 42 fixed to the opening of the frame 41. The stator 2 is housed inside the frame 41.

The frame 41 has a cylindrical portion 41a that surrounds the stator 2 from outside in the radial direction and a wall portion 41b formed at a back end of the cylindrical portion 41a. The wall portion 41b is a disk-shaped portion that extends in a plane orthogonal to the axial direction. A holding portion 41c is formed at the center of the wall portion 41b in the radial direction so as to hold a bearing 32. The holding portion 41c has an end surface portion 41d that is in contact with an end surface of the bearing 32 in the axial direction.

Leg portions 43 extend outward in the radial direction from a back end of the frame 41. In this example, a plurality of leg portions 43 are provided in the circumferential direction. The four leg portions 43 are arranged at equal intervals in the circumferential direction in this example, but the number and arrangement of the leg portions 43 are not limited. The frame 41 is fixed to the mounting plate 135 of the support body 130 (FIG. 2) at the leg portions 43 by screws (indicated by dashed-dotted lines 43a in FIG. 3).

The bearing support plate 42 faces the wall portion 41b of the frame 41 in the axial direction. The bearing support plate 42 is a disk-shaped member that extends in a plane orthogonal to the axial direction. The bearing support plate 42 is fixed to the opening of the frame 41, for example, by press fit.

An annular holding portion 42a that holds a bearing 31 is formed at the center of the bearing support plate 42 in the radial direction. The holding portion 42a has an end surface portion 42b that is in contact with an end surface of the bearing 31 in the axial direction.

The frame 41 may be formed of a magnetic material, but is desirably formed of a nonmagnetic material. When the frame 41 is formed of a nonmagnetic material, it is desirable to use a thermosetting resin such as a bulk molding compound (BMC). The bearing support plate 42 is formed of a magnetic material such as iron.

The shaft 18 of the rotor 1 is made of iron or stainless steel. The shaft 18 is rotatably supported by the bearing 31 held by the bearing support plate 42 and the bearing 32 held by the wall portion 41b of the frame 41.

The shaft 18 passes through the bearing support plate 42 in the axial direction and protrudes therefrom frontward. The rotating blade 6 is fixed to the tip end of the shaft 18.

The rotating blade 6 has a hub 61 fixed to the shaft 18 and a plurality of blades 62 fixed to the hub 61. The hub 61 is cylindrical, and the inner circumferential surface of the hub 61 is fixed to the shaft 18.

On the outer circumferential surface of the hub 61, the plurality of blades 62 are arranged at equal intervals in the circumferential direction. The number of blades 62 is, for example, three (see FIG. 2), but only needs to be two or more. When the rotating blade 6 rotates together with the shaft 18, the blades 62 generate an airflow in the axial direction.

The rotating blade 6 is desirably formed of a nonmagnetic material. The rotating blade 6 is desirably formed of a resin, more specifically polypropylene (PP) to which glass fiber and mica are added.

### (Configuration of Motor)

FIG. 4 is a cross-sectional view illustrating the motor 3. The motor 3 has the rotor 1 and the annular stator 2 surrounding the rotor 1 as described above. The motor 3 is a permanent-magnet embedded motor in which permanent magnets 16 are embedded in the rotor 1. An air gap G of, for example, 0.4 mm, is provided between the stator 2 and the rotor 1.

The stator 2 has a stator core 20 and coils 25 wound on the stator core 20. The stator core 20 is composed of a plurality of electromagnetic steel sheets which are stacked in the axial direction and fastened together by crimping or the like. The sheet thickness of each electromagnetic steel sheet is, for example, 0.2 mm to 0.5 mm.

The stator core 20 has a yoke 21 having an annular shape about the axis C1 and a plurality of teeth 22 extending inward in the radial direction from the yoke 21. The teeth 22 are arranged at equal intervals in the circumferential direction. The number of teeth 22 is 12 in this example, but is not limited to 12. A slot, which is a space to house the coil 25, is formed between adjacent teeth 22.

A tip end 22a of the tooth 22 on its inner side in the radial direction has a greater width in the circumferential direction than other portions of the tooth 22. The tip end 22a of the tooth 22 faces the outer circumference of the rotor 1 via the air gap G described above.

An insulating portion made of polybutylene terephthalate (PBT) or the like is fixed to the stator core 20. The coil 25 is wound around the tooth 22 via the insulating portion. The coil 25 is made of copper or aluminum.

The rotor 1 has the shaft 18, a rotor core 10 fixed to the shaft 18, and the plurality of permanent magnets 16 embedded in the rotor core 10.

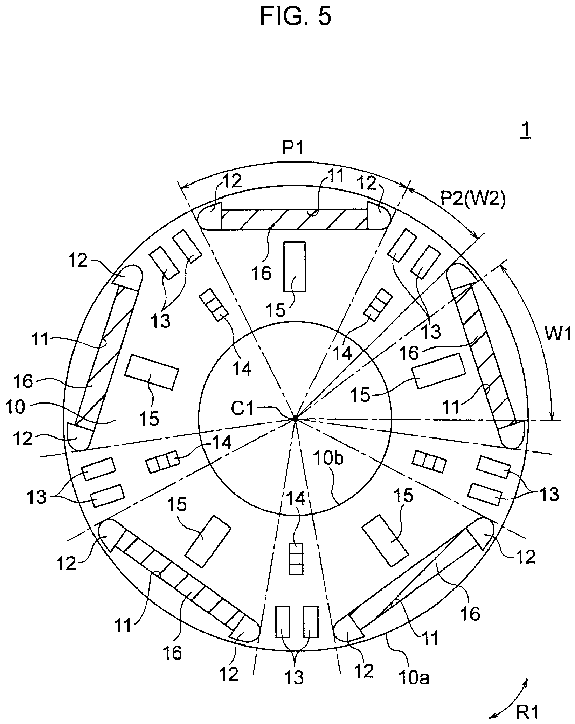

FIG. 5 is a diagram illustrating the rotor core 10 and the permanent magnets 16 of the rotor 1. The rotor core 10 is a member having an annular shape about the axis C1. The rotor core 10 has an outer circumference 10a and an inner circumference 10b, both of which are annular. The rotor core 10 is composed of a plurality of electromagnetic steel sheets which are stacked in the axial direction and fastened together by crimping or the like. The sheet thickness of each electromagnetic steel sheet is, for example, 0.2 mm to 0.5 mm.

The rotor core 10 has a plurality of magnet insertion holes 11. The magnet insertion holes 11 are arranged at equal intervals in the circumferential direction and also at the same distance from the axis C1. The number of magnet insertion holes 11 is five in this example.

Each magnet insertion hole 11 extends linearly in a direction orthogonal to a straight line (referred to as a magnetic pole center line) in the radial direction that passes through a pole center, i.e., a center of the magnetic insertion hole 11 in the circumferential direction. The shape of the magnet insertion hole 11 is not limited to such a shape, but may be a V shape, for example.

A flux barrier 12, which is a hole, is formed at each end of the magnet insertion hole 11 in the circumferential direction. A thin wall portion is formed between the flux barrier 12 and the outer circumference 10a of the rotor core 10. In order to suppress the leakage magnetic flux between adjacent magnetic poles, it is desirable that the thickness of the thin wall portion is the same as the sheet thickness of each electromagnetic steel sheet of the rotor core 10.

The permanent magnet 16 is inserted in each magnet insertion hole 11. The permanent magnet 16 has a flat plate shape, and has a rectangular cross-sectional shape in a plane orthogonal to the axial direction. The permanent magnet 16 is composed of a rare earth magnet. More specifically, the permanent magnet 16 is composed of a neodymium sintered magnet containing Nd (neodymium), Fe (iron), and B (boron).

The permanent magnets 16 are arranged so that the same magnetic poles (for example, the N poles) face the outer circumference 10a side of the rotor core 10. In the rotor core 10, a magnetic pole (for example, the S pole) opposite to the permanent magnets is formed in a region between the permanent magnets adjacent in the circumferential direction.

Thus, five magnet magnetic poles P1 constituted by the permanent magnets 16 and five virtual magnetic poles P2 constituted by the rotor core 10 are formed in the rotor 1. This configuration is referred to as a consequent pole type. Hereinafter, when the term "magnetic pole" is simply used, it refers to either the magnet magnetic pole P1 and the virtual magnetic pole P2. The rotor 1 has 10 magnetic poles.

In the consequent pole rotor 1, the number of permanent magnets 16 can be halved as compared with a non-consequent pole rotor having the same number of poles. Since the number of the permanent magnets 16 which are expensive is small, the manufacturing cost of the rotor 1 is reduced.

Although the number of poles of the rotor 1 is 10 in this example, the number of poles only needs to be an even number of four or more. Although one permanent magnet 16 is disposed in each magnet insertion hole 11 in this example, two or more permanent magnets 16 may be disposed in each magnet insertion hole 11. The magnet magnetic pole P1 may be the S pole, while the virtual magnetic pole P2 may be the N pole.

The rotor core 10 has at least one slit 13 elongated in the radial direction in the virtual magnetic pole P2. The slit 13 functions to rectify the flow of magnetic flux passing through the virtual magnetic pole P2 so that the magnetic flux flows in the radial direction. In this regard, it is not necessary to form the slit 13 in the virtual magnetic pole P2.

The rotor core 10 has cavity portions 15 on the inner side of the magnet insertion holes 11 in the radial direction. Each cavity portion 15 is provided to uniformize the flow of magnetic flux in the circumferential direction, on the inner side of the magnet insertion hole 11 in the radial direction. The cavity portion 15 has a slit shape elongated in the radial direction. In this regard, the shape of the cavity portion 15 is not limited to a slit shape, but may be a circular shape or other shapes.

The shaft 18 is fitted into the inner circumference 10b of the rotor core 10. In this regard, a resin portion may be provided between the inner circumference 10b of the rotor core 10 and the shaft 18.

A width W2 of the virtual magnetic pole P2 in the circumferential direction is narrower than a width W1 of the permanent magnet 16 in the circumferential direction. The magnetic flux density at the virtual magnetic pole P2 increases because much magnetic flux exiting from the permanent magnets 16 passes through the narrow virtual magnetic poles P2. That is, a reduction in the magnetic flux density due to absence of the permanent magnet in the virtual magnetic pole P2 can be compensated for by narrowing the width W2 of the virtual magnetic pole P2.

### (Operation)

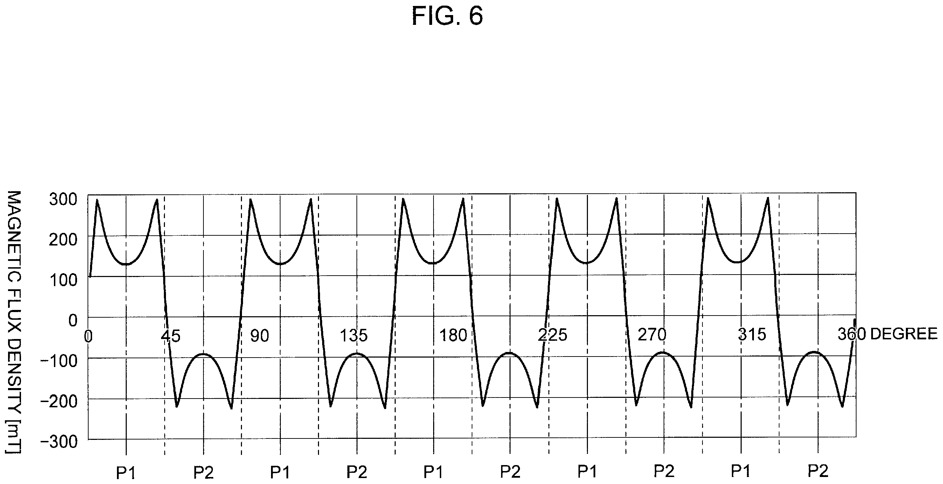

Next, the operation of the first embodiment will be described. FIG. 6 is a graph illustrating the magnetic flux density distribution on the outer circumference of the rotor 1, obtained by actual measurement of the magnetic flux density. The vertical axis indicates the magnetic flux density [mT], while the horizontal axis indicates the position in the circumferential direction, i.e., an angle [degrees] about the axis C1. In FIG. 6, the positions of the pole center of the magnet magnetic pole P1 and the position of the pole center of the virtual magnetic pole P2 are indicated by reference characters P1 and P2, respectively.

As illustrated in FIG. 6, the magnetic flux density reaches a positive peak at the magnet magnetic pole P1 and a negative peak at the virtual magnetic pole P2. In this regard, the reason why the magnetic flux density decreases at the pole center of the magnet magnetic pole P1 while the magnetic flux density increases at the pole center of the virtual magnetic pole P2 is that the magnetic flux flows symmetrically with respect to the corresponding pole center.

An absolute value of the magnetic flux density at the virtual magnetic pole P2 is smaller than an absolute value of the magnetic flux density at the magnet magnetic pole P1. This is because the virtual magnetic pole P2 has no permanent magnet 16.

In the consequent pole rotor 1, since the virtual magnetic pole P2 has no permanent magnet 16, the magnetic flux is more likely to flow toward the center of the rotor core 10. The magnetic flux flowing toward the center of the rotor core 10 further flows into the shaft 18, i.e., a leakage magnetic flux occurs.

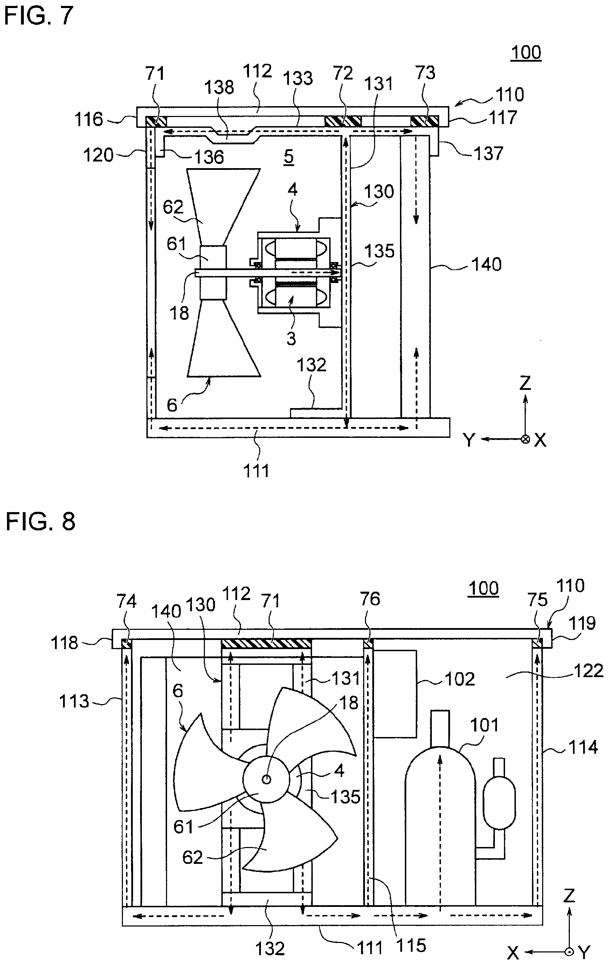

FIG. 7 is a diagram illustrating the flow of leakage magnetic flux in the outdoor unit 100 of the first embodiment. The magnetic flux flowing to the shaft 18 further flows through the pillars 131 of the support body 130 upward and downward and then proceeds toward the top plate 112 and the bottom plate 111.

The top plate 112 is exposed to the outside of the outdoor unit 100 and has a large area. Thus, if the magnetic flux flows to the top plate 112, it may affect peripheral components of the outdoor unit 100. Thus, it is desirable to suppress the magnetic flux from flowing to the top plate 112. Further, in order to meet the IATA standards, it is required that the magnetic flux does not flow to the top plate 112 having a large area.

For this reason, in the first embodiment, the nonmagnetic bodies 71, 72, and 73 are disposed between the support body 130 and the top plate 112. Since the nonmagnetic bodies 71, 72, and 73 are disposed in this way, the contact area between the support body 130 and the top plate 112 can be reduced. This makes it possible to suppress the flow of magnetic flux from the support body 130 to the top plate 112.

The nonmagnetic body 71 is also located between the upper end of the front panel 120 and the top plate 112, and thus the flow of magnetic flux from the front panel 120 to the top plate 112 can be suppressed.

It is most desirable that the support body 130 is not in contact with the top plate 112, but the support body 130 is not limited to such a configuration. In other words, by reducing the contact area between the support body 130 and the top plate 112, the effect of reducing the flow of magnetic flux from the support body 130 to the top plate 112 can be achieved.

It is not necessary to provide all of the nonmagnetic bodies 71, 72, and 73. When at least one nonmagnetic body is provided between the top plate 112 and the support body 130, the effect of reducing the flow of magnetic flux to the top plate 112 can be achieved.

As illustrated in FIG. 8, the magnetic flux flowing from the support body 130 to the bottom plate 111 further flows to the side plates 113 and 114 and the partition plate 115. The magnetic flux flowing to the side plates 113 and 114 and the partition plate 115 further flows toward the top plate 112.

For this reason, in the first embodiment, the nonmagnetic body 74 is disposed between the side plate 113 and the top plate 112, the nonmagnetic body 75 is disposed between the side plate 114 and the top plate 112, and the nonmagnetic body 76 is disposed between the partition plate 115 and the top plate 112.

The arrangement of the nonmagnetic bodies 74, 75, and 76 in this way makes it possible to suppress the flow of magnetic flux from the side plates 113 and 114 and the partition plate 115 to the top plate 112. That is, the effect of suppressing magnetic flux leakage to the top plate 112 can be enhanced.

In this regard, it is not necessary to provide all of the nonmagnetic bodies 74, 75, and 76. The effect of reducing the flow of magnetic flux to the top plate 112 can be achieved as long as the nonmagnetic body is disposed at least one of between the side plate 113 and the top plate 112, between the side plate 114 and the top plate 112, and between the partition plate 115 and the top plate 112.

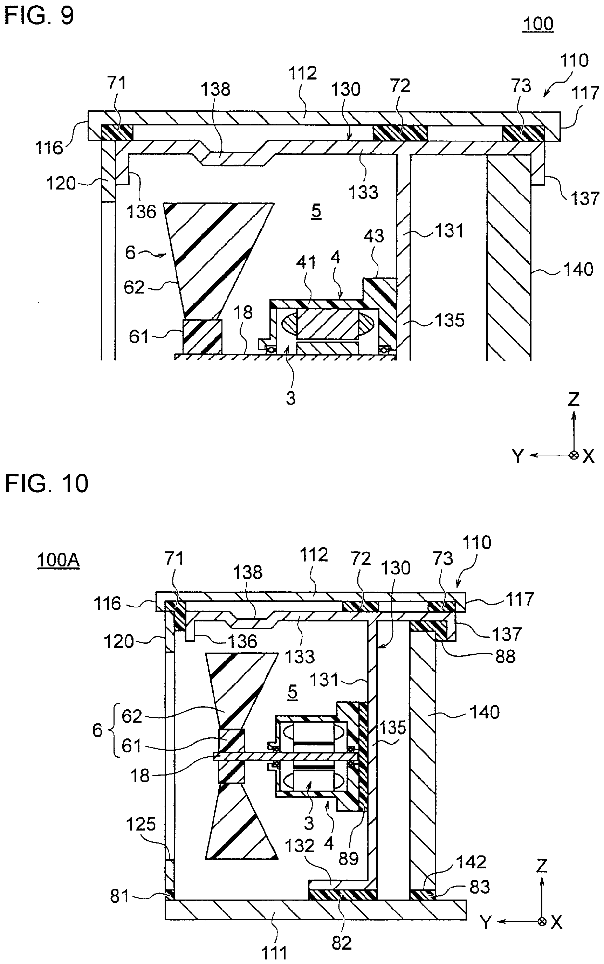

FIG. 9 is a cross-sectional view illustrating the upper part of the outdoor unit 100. The arm portion 133 of the support body 130 has a bent portion 138 as a displacement portion that is displaced in a direction away from the top plate 112. The bent portion 138 is formed, for example, by bending the metal sheet, which constitutes the arm portion 133, in the direction away from the top plate 112.

The bent portion 138 of the arm portion 133 is located at a greater distance from the top plate 112. This makes it possible to prevent contact between the top plate 112 and the arm portion 133 even when the top plate 112 is deformed downward, or even when the arm portion 133 is deformed upward. Thus, the magnetic flux leakage to the top plate 112 due to the contact between the top plate 112 and the arm portion 133 can be suppressed.

The bent portion 138 is formed at a position above the rotating blade 6 in this example, but may be formed at any other positions. The bent portion 138 may be formed at two or more locations on the arm portion 133.

### (Effects of Embodiment)

As described above, the outdoor unit 100 of the first embodiment includes the motor 3 having the consequent pole rotor 1 and the stator 2, the frame 41 holding the motor 3, the support body 130 supporting the frame 41, and the unit housing 110 enclosing the frame 41 and the support body 130. The nonmagnetic bodies 71, 72, and 73 (the first nonmagnetic bodies) are disposed between the support body 130 and the unit housing 110. This makes it possible to suppress the magnetic flux leakage to the outside of the outdoor unit 100. Thus, the influence of the magnetic flux onto the peripheral components can be suppressed, and the IATA standards can be satisfied.

In particular, the nonmagnetic bodies 71, 72, and 73 are disposed between the support body 130 and the top plate 112, so that the magnetic flux can be prevented from flowing to the top plate 112 having a larger area. Thus, the effect of suppressing the magnetic flux leakage can be enhanced.

Further, the nonmagnetic bodies 74 and 75 (the second nonmagnetic bodies) are disposed between the side plate 113 and the top plate 112 and between the side plate 114 and the top plate 112, respectively. Thus, it is possible to suppress the magnetic flux leakage to the top plate 112 through the side plates 113 and 114.

In addition, the nonmagnetic body 76 (the third nonmagnetic body) is disposed between the partition plate 115 and the top plate 112, and thus it is possible to suppress the magnetic flux leakage to the top plate 112 through the partition plate 115.

At least a part (the bent portion 138) of the arm portion 133 serving as a top-plate facing portion of the support body 130 is displaced in the direction away from the top plate 112, and thus the contact between the top plate 112 and the arm portion 133 can be suppressed. Thus, the magnetic flux leakage to the top plate 112 due to this contact can be suppressed.

The magnetic flux leakage to the top plate 112 through the heat exchanger 140 can be suppressed because the heat exchanger 140 is formed of a nonmagnetic material.

The magnetic flux leakage from the motor 3 to the support body 130 can also be suppressed because the frame 41 holding the motor 3 is formed of a nonmagnetic material. Thus, the effect of suppressing the leakage magnetic flux to the outside of the outdoor unit 100 can be enhanced.

### Second Embodiment

Next, an outdoor unit 100A of a second embodiment will be described. FIG. 10 is a longitudinal-sectional view illustrating the outdoor unit 100A of the second embodiment. In the second embodiment, in addition to the nonmagnetic bodies 71, 72, and 73 described in the first embodiment, nonmagnetic bodies are further disposed between the bottom plate 111 and each of the support body 130, the side plates 113 and 114, and the partition plate 115.

A nonmagnetic body 82 is disposed between the pedestal portion 132 of the support body 130 and the bottom plate 111. The nonmagnetic body 82 desirably has the same area as a lower surface of the pedestal portion 132, but the nonmagnetic body 82 is not limited to such a configuration. The nonmagnetic body 82 may be disposed at a plurality of locations along the lower surface of the pedestal portion 132. The nonmagnetic body 82 suppresses the flow of magnetic flux from the support body 130 to the bottom plate 111.

A nonmagnetic body 81 is disposed between the front panel 120 and the bottom plate 111. It is sufficient that the nonmagnetic body 81 is disposed at least at one location in the X direction along a lower end of the front panel 120. The nonmagnetic body 81 suppresses the flow of magnetic flux from the bottom plate 111 to the front panel 120.

A nonmagnetic body 83 is disposed between the heat exchanger 140 and the bottom plate 111. It is sufficient that the nonmagnetic body 83 is disposed at least at one location in the X direction along a lower end of the heat exchanger 140. The nonmagnetic body 83 suppresses the flow of magnetic flux from the bottom plate 111 to the heat exchanger 140.

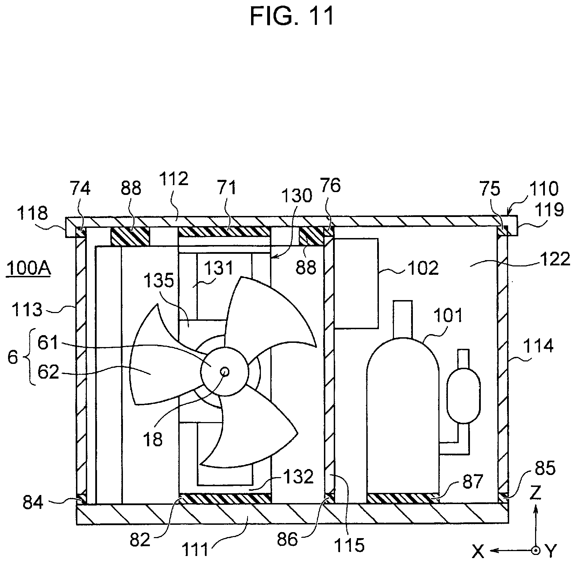

FIG. 11 is a cross-sectional view illustrating the outdoor unit 100A of the second embodiment. As illustrated in FIG. 11, a nonmagnetic body 84 is disposed between a lower end of the side plate 113 and the bottom plate 111. It is sufficient that the nonmagnetic body 84 is disposed at least at one location in the Y direction along the lower end of the side plate 113. The nonmagnetic body 84 suppresses the flow of magnetic flux from the bottom plate 111 to the side plate 113.

Similarly, a nonmagnetic body 85 is disposed between a lower end of the side plate 114 and the bottom plate 111. It is sufficient that the nonmagnetic body 85 is disposed at least at one location in the Y direction along the lower end of the side plate 114. The nonmagnetic body 85 suppresses the flow of magnetic flux from the bottom plate 111 to the side plate 114.

A nonmagnetic body 86 is disposed between a lower end of the partition plate 115 and the bottom plate 111. It is sufficient that the nonmagnetic body 86 is disposed at least at one location in the Y direction along the lower end of the partition plate 115. The nonmagnetic body 86 suppresses the flow of magnetic flux from the bottom plate 111 to the partition plate 115.

A nonmagnetic body 87 is disposed between the compressor 101 and the bottom plate 111. The nonmagnetic body 87 desirably has the same area as the bottom surface of the compressor 101, but the nonmagnetic body 87 is not limited to such a configuration. The nonmagnetic body 87 may be disposed at a plurality of locations along the bottom surface of the compressor 101. The nonmagnetic body 87 suppresses the flow of magnetic flux from the bottom plate 111 to the compressor 101.

Further, a nonmagnetic body 88 is disposed between the upper end of the heat exchanger 140 and the arm portion 133. It is sufficient that the nonmagnetic body 88 is disposed at least at one location in the X direction along the upper end of the heat exchanger 140. The nonmagnetic body 88 has an L shape in the YZ plane so as to be in contact with the upper end of the heat exchanger 140 and the fixing portion 137 (see FIG. 10). The nonmagnetic body 88 suppresses the flow of magnetic flux from the heat exchanger 140 to the arm portion 133.

A nonmagnetic body 89 is disposed between the motor housing 4 and the mounting plate 135 of the support body 130. The nonmagnetic body 89 suppresses the flow of magnetic flux generated in the rotor 1 into the support body 130 through the motor housing 4.

The nonmagnetic bodies 81 to 89 are formed of the same material as the nonmagnetic bodies 71 to 76 described in the first embodiment.

In addition, the outdoor unit 100A of the second embodiment has the nonmagnetic bodies 71 to 76 described in the first embodiment. The configurations of the nonmagnetic bodies 71 to 76 are as described in the first embodiment. In this regard, the nonmagnetic body 71 has an L shape in the YZ plane so as to be in contact with a lower surface of the top plate 112 and a front end of the fixing portion 136 (see FIG. 10).

The arrangement of the nonmagnetic bodies 81 to 89 in this way makes it possible to suppress magnetic flux leakage to the bottom plate 111, the top plate 112, the side plates 113 and 114, the front panel 120, and the heat exchanger 140. In other words, it is possible to suppress the magnetic flux leakage to the surface of the outdoor unit 100 exposed to the outside, and thus the effect of suppressing the magnetic flux leakage to the outside of the outdoor unit 100 can be enhanced.

In this regard, it is not necessary to provide all the nonmagnetic bodies 71 to 76 and 81 to 89. The effect of reducing the magnetic flux leakage to the outside of the outdoor unit 100 can be achieved as long as at least one of the nonmagnetic bodies 81 to 89 is provided.

The outdoor unit 100A of the second embodiment is configured in the same manner as the outdoor unit 100 of the first embodiment except for the provision of the nonmagnetic bodies 81 to 89 and the shape of the nonmagnetic body 71.

As described above, in the second embodiment, the nonmagnetic body 82 (the fourth nonmagnetic body) is disposed between the bottom plate 111 and the support body 130, and thus the flow of magnetic flux from the support body 130 to the bottom plate 111 can be suppressed. Therefore, the effect of suppressing the magnetic flux leakage to the outside of the outdoor unit 100A can be enhanced.

Further, the nonmagnetic bodies 84 and 85 (the fifth nonmagnetic bodies) are disposed between the side plate 113 and the bottom plate 111, and between the side plate 114 and the bottom plate 111, respectively. Thus, it is possible to suppress the flow of magnetic flux from the bottom plate 111 to the side plates 113 and 114.

In addition, the nonmagnetic body 86 (the sixth nonmagnetic body) is disposed between the partition plate 115 and the bottom plate 111, and thus it is possible to suppress the flow of magnetic flux from the bottom plate 111 to the top plate 112 through the partition plate 115.

Further, the nonmagnetic body 87 (the seventh nonmagnetic body) is disposed between the compressor 101 and the bottom plate 111, and thus the magnetic flux leakage from the bottom plate 111 to the compressor 101 can be suppressed. Therefore, the reliability of the operation of the compressor 101 can be enhanced.

The nonmagnetic body 83 (the eighth nonmagnetic body) is disposed between the heat exchanger 140 and the bottom plate 111, and thus the magnetic flux leakage from the bottom plate 111 to the heat exchanger 140 can be suppressed. Therefore, the effect of suppressing the magnetic flux leakage to the outside of the outdoor unit 100 can be enhanced.

Further, the nonmagnetic body 81 (the ninth nonmagnetic body) is disposed between the front panel 120 and the bottom plate 111, and thus the magnetic flux leakage from the bottom plate 111 to the front panel 120 can be suppressed. Therefore, the effect of suppressing the magnetic flux leakage to the outside of the outdoor unit 100 can be enhanced.

In addition, the nonmagnetic body 89 (the tenth nonmagnetic body) is disposed between the motor housing 4 and the support body 130, and thus it is possible to suppress the flow of magnetic flux generated in the rotor 1 into the support body 130 through the motor housing 4.

### (Air Conditioner)

Next, an air conditioner to which the outdoor unit 100 or 100A of each of the embodiments is applicable will be described. FIG. 12 is a diagram illustrating the configuration of an air conditioner 200 to which the outdoor unit 100 of the first embodiment is applied. The air conditioner 200 includes the outdoor unit 100, the indoor unit 201, and a refrigerant pipe 207 that connects these units.

The indoor unit 201 has an indoor fan 202. The indoor fan 202 has an impeller 203, which is, for example, a cross flow fan, a motor 204 that drives the impeller 203, the heat exchanger 205 disposed to face the impeller 203, and a casing 206 in which these elements are housed.

The compressor 101, the heat exchanger 140, and a not-shown decompression device of the outdoor unit 100, and the heat exchanger 205 of the indoor unit 201 are connected by the refrigerant pipe 207 to constitute a refrigerant circuit.

In the outdoor unit 100, the rotation of the motor 3 of the fan 5 causes the rotating blade 6 to rotate, and generates an airflow passing through the heat exchanger 140. During a cooling operation, heat is released when the refrigerant compressed by the compressor 101 is condensed in the heat exchanger 140 (condenser). Air heated with this heat is blown out through the opening 121 (FIG. 1) of the front panel 120 to the outside of the room by the airflow of the fan 5.

In the indoor unit 201, the rotation of the motor 204 in the indoor fan 202 rotates the impeller 203 to blow air into the room. During the cooling operation, air deprived of heat when the refrigerant evaporates in the heat exchanger 205 (evaporator) is blown into the room by the airflow of the indoor fan 202.

As described in the first embodiment, the magnetic flux leakage to the outside of the outdoor unit 100 can be suppressed, and thus it is possible to suppress the influence of the magnetic flux onto peripheral components. Further, the IATA standards can be satisfied.

Instead of the outdoor unit 100 of the first embodiment, the outdoor unit 100A (FIGS. 10 and 11) of the second embodiment may be used.

### DESCRIPTION OF REFERENCE CHARACTERS

1: rotor, 2: stator, 3: motor, 4: motor housing, 5: fan, 6: rotating blade, 10: rotor core, 11: magnet insertion hole, 12: flux barrier, 13: slit, 16: permanent magnet, 18: shaft, 20: stator core, 21: yoke, 22: tooth, 25: coil, 31,32: bearing, 41: frame, 42: bearing support plate, 43: leg portion, 61: hub, 62: blade, 71, 72, 73, 74, 75, 76: nonmagnetic body, 81, 82, 83, 84, 85, 86, 87, 88, 89: nonmagnetic body, 100, 100A: outdoor unit, 101: compressor, 110: unit housing, 111: bottom plate, 112: top plate, 113, 114: side plate, 115: partition plate, 120: front panel, 121: opening, 130: support body, 131: pillar, 132: pedestal portion, 133: arm portion, 135: mounting plate, 140: heat exchanger, 200: air conditioner, 201: indoor unit, 202: indoor fan, 206: refrigerant pipe.

## Claims

1. An outdoor unit (100, 100A) comprising:
a motor (3) comprising:
a rotor (1) having a rotor core (10) and a permanent magnet (16) attached to the rotor core (10), the permanent magnet (16) forming a magnet magnetic pole (P1), a part of the rotor core (10) forming a virtual magnetic pole (P2); and
a stator (2) surrounding the rotor (1);
a frame (41) holding the motor (3);
a support body (130) supporting the frame (41);
a unit housing (110) in which the frame (41) and the support body (130) are housed, the unit housing (110) having a top plate (112) located above the frame (41), a bottom portion (111) located under the frame (41), and a side plate (113, 114); and
a nonmagnetic body (71, 72, 73) disposed between the support body (130) and the top plate (112)
wherein a nonmagnetic body (74, 75, 82, 84, 85) is further disposed at least one of between the support body (130) and the bottom portion (111), between the side plate (113, 114) and the top plate (112) and between the side plate (113, 114) and the bottom portion (111).

2. The outdoor unit (100, 100A) according to claim 1, further comprising:
a compressor (101) disposed inside the unit housing (110); and
a partition member (115) disposed between the support body (130) and the compressor (101),
wherein a nonmagnetic body (76, 86) is further disposed at least one of between the partition member (115) and the top plate (112) and between the partition member (115) and the bottom portion (111).

3. The outdoor unit (100A) according to claim 2, wherein a nonmagnetic body (87) is further disposed between the compressor (101) and the bottom portion (111).

4. The outdoor unit (100, 100A) according to any one of claims 1 to 3,
wherein the support body (130) has a top-plate facing portion (133) that faces the top plate (112), and
wherein at least a part (138) of the top-plate facing portion (133) is displaced in a direction away from the top plate (112).

5. The outdoor unit (100, 100A) according to any one of claims 1 to 4, further comprising:
a heat exchanger (140) disposed inside the unit housing (110),
wherein the heat exchanger (140) is formed of a nonmagnetic material.

6. The outdoor unit (100A) according to claim 5, wherein a nonmagnetic body (83, 88) is further disposed at least one of between the heat exchanger (140) and the top plate (112) and between the heat exchanger (140) and the bottom portion (111).

7. The outdoor unit (100, 100A) according to any one of claims 1 to 6, wherein the unit housing (110) has a front panel (120), and
wherein a nonmagnetic body (71, 81) is further disposed at least one of between the front panel (120) and the top plate (112) and between the front panel (120) and the bottom portion (111) .

8. The outdoor unit (100, 100A) according to claim 7, wherein a nonmagnetic body (71) is further disposed between the front panel (120) and the support body (130).

9. The outdoor unit (100, 100A) according to any one of claims 1 to 8, wherein a nonmagnetic body (89) is further disposed between the frame (41) and the support body (130).

10. The outdoor unit (100, 100A) according to any one of claims 1 to 9, wherein the frame (41) is formed of a nonmagnetic material.

11. The outdoor unit (100, 100A) according to any one of claims 1 to 10, wherein the rotor (1) has a shaft (18),
wherein the outdoor unit (100, 100A) further comprising a rotating blade (6) fixed to the shaft (18).

12. An air conditioner (200) comprising:
the outdoor unit (100, 100A) according to any one of claims 1 to 11; and
an indoor unit (201) connected to the outdoor unit (100, 100A) via a refrigerant pipe (207).

## Patentansprüche

1. Außeneinheit (100, 100A), umfassend:
einen Motor (3), umfassend:
einen Rotor (1), aufweisend einen Rotorkern (10) und einem am Rotorkern (10) befestigten Permanentmagneten (16), wobei der Permanentmagnet (16) einen magnetischen Magnetpool (P1) bildet und ein Teil des Rotorkerns (10) einen virtuellen magnetischen Pol (P2) bildet; und
einen Stator (2), umgebend den Rotor (1);
einen Rahmen (41), haltend den Motor (3);
einen Stützkörper (130), stützend den Rahmen (41);
ein Einheitsgehäuse (110), in welchem der Rahmen (41) und der Stützkörper (130) untergebracht sind, wobei das Einheitsgehäuse (110) eine obere Platte (112), die sich über dem Rahmen (41) befindet, einen unteren Abschnitt (111), der sich unter dem Rahmen (41) befindet, und eine Seitenplatte (113, 114) aufweist; und
einen nicht-magnetischen Körper (71, 72, 73), der zwischen dem Stützkörper (130) und der oberen Platte (112) angeordnet ist,
wobei ein nicht-magnetischer Körper (74, 75, 82, 84, 85) ferner zumindest zwischen einem von dem Stützkörper (130) und dem unteren Abschnitt (111), zwischen der Seitenplatte (113, 114) und der oberen Platte (112) und zwischen der Seitenplatte (113, 114) und dem unteren Abschnitt (111) angeordnet ist.

2. Außeneinheit (100, 100A) nach Anspruch 1, ferner umfassend:
einen Verdichter (101), der im Inneren des Einheitsgehäuses (110) angeordnet ist; und
ein Trennelement (115), das zwischen dem Stützkörper (130) und dem Verdichter (101) angeordnet ist,
wobei ein nicht-magnetischer Körper (76, 86) ferner zumindest zwischen dem Trennelement (115) und der oberen Platte (112) oder zwischen dem Trennelement (115) und dem unteren Abschnitt (111) angeordnet ist.

3. Außeneinheit (100A) nach Anspruch 2, wobei ein nicht-magnetischer Körper (87) ferner zwischen dem Verdichter (101) und dem unteren Abschnitt (111) angeordnet ist.

4. Außeneinheit (100, 100A) nach einem der Ansprüche 1 bis 3,
wobei der Stützkörper (130) einen der oberen Platte zugewandten Abschnitt (133) aufweist, welcher der oberen Platte (112) zugewandt ist, und
wobei zumindest ein Teil (138) des der oberen Platte zugewandten Abschnitts (133) in eine Richtung weg von der oberen Platte (112) verschoben ist.

5. Außeneinheit (100, 100A) nach einem der Ansprüche 1 bis 4, ferner umfassend:
einen Wärmetauscher (140), welcher in dem Einheitsgehäuse (110) angeordnet ist,
wobei der Wärmetauscher (140) aus einem nicht-magnetischen Material ausgebildet ist.

6. Außeneinheit (100A) nach Anspruch 5, wobei ein nicht-magnetischer Körper (83, 88) ferner zumindest zwischen dem Wärmetauscher (140) und der oberen Platte (112) oder zwischen dem Wärmetauscher (140) und dem unteren Abschnitt (111) angeordnet ist.

7. Außeneinheit (100, 100A) nach einem der Ansprüche 1 bis 6, wobei das Einheitsgehäuse (110) ein Frontpaneel (120) aufweist, und
wobei ein nicht-magnetischer Körper (71, 81) ferner zumindest zwischen dem Frontpaneel (120) und der oberen Platte (112) oder zwischen dem Frontpaneel (120) und dem unteren Abschnitt (111) angeordnet ist.

8. Außeneinheit (100, 100A) nach Anspruch 7, wobei ein nicht-magnetischer Körper (71) ferner zwischen dem Frontpaneel (120) und dem Stützkörper (130) angeordnet ist.

9. Außeneinheit (100, 100A) nach einem der Ansprüche 1 bis 8, wobei ein nicht-magnetischer Körper (89) ferner zwischen dem Rahmen (41) und dem Stützkörper (130) angeordnet ist.

10. Außeneinheit (100, 100A) nach einem der Ansprüche 1 bis 9, wobei der Rahmen (41) aus einem nicht-magnetischen Material ausgebildet ist.

11. Außeneinheit (100, 100A) nach einem der Ansprüche 1 bis 10, wobei der Rotor (1) eine Welle (18) aufweist,
wobei die Außeneinheit (100, 100A) ferner einen an der Welle (18) befestigten Drehflügel (6) umfasst.

12. Klimaanlage (200), umfassend:
die Außeneinheit (100, 100A) nach einem der Ansprüche 1 bis 11; und
eine Inneneinheit (201), die durch eine Kältemittelleitung (207) mit der Außeneinheit (100, 100A) verbunden ist.

## Revendications

1. Unité extérieure (100, 100A) comprenant :
un moteur (3) comprenant :
un rotor (1) doté d'un noyau de rotor (10) et d'un aimant permanent (16) fixé au noyau de rotor (10), l'aimant permanent (16) formant un pôle magnétique (P1), une partie du noyau de rotor (10) formant un pôle magnétique virtuel (P2) ; et
un stator (2) entourant le rotor (1) ;
un cadre (41) supportant le moteur (3) ;
un corps de support (130) supportant le cadre (41) ;
un boîtier d'unité (110) dans lequel le cadre (41) et le corps de support (130) sont logés, le boîtier d'unité (110) présentant une plaque supérieure (112) située au-dessus du cadre (41), une partie inférieure (111) située sous le cadre (41), et une plaque latérale (113, 114) ; et
un corps non magnétique (71, 72, 73) disposé entre le corps de support (130) et la plaque supérieure (112)
dans laquelle un corps non magnétique (74, 75, 82, 84, 85) est disposé en outre au moins entre le corps de support (130) et la partie inférieure (111), entre la plaque latérale (113, 114) et la plaque supérieure (112) ou entre la plaque latérale (113, 114) et la partie inférieure (111).

2. Unité extérieure (100, 100A) selon la revendication 1, comprenant en outre :
un compresseur (101) disposé à l'intérieur du boîtier d'unité (110) ; et
un élément de séparation (115) disposé entre le corps de support (130) et le compresseur (101),
dans laquelle un corps non magnétique (76, 86) est en outre disposé au moins entre l'élément de séparation (115) et la plaque supérieure (112) et entre l'élément de séparation (115) et la partie inférieure (111).

3. Unité extérieure (100A) selon la revendication 2, dans laquelle un corps non magnétique (87) est en outre disposé entre le compresseur (101) et la partie inférieure (111).

4. Unité extérieure (100, 100A) selon l'une quelconque des revendications 1 à 3,
dans laquelle le corps de support (130) comporte une partie (133) faisant face à la plaque supérieure (112), et
dans laquelle au moins une partie (138) de la partie faisant face à la plaque supérieure (133) est déplacée dans une direction opposée à la plaque supérieure (112).

5. Unité extérieure (100, 100A) selon l'une quelconque des revendications 1 à 4, comprenant en outre :
un échangeur de chaleur (140), disposé à l'intérieur du boîtier d'unité (110),
dans laquelle l'échangeur de chaleur (140) est constitué d'un matériau non magnétique.

6. Unité extérieure (100A) selon la revendication 5, dans laquelle un corps non magnétique (83, 88) est en outre disposé au moins entre l'échangeur de chaleur (140) et la plaque supérieure (112) et entre l'échangeur de chaleur (140) et la partie inférieure (111).

7. Unité extérieure (100, 100A) selon l'une quelconque des revendications 1 à 6, dans laquelle le boîtier d'unité (110) comporte un panneau avant (120), et
dans laquelle un corps non magnétique (71, 81) est en outre disposé au moins entre le panneau avant (120) et la plaque supérieure (112) ou entre l'élément de séparation (120) et la partie inférieure (111).

8. Unité extérieure (100, 100A) selon la revendication 7, dans laquelle un corps non magnétique (71) est en outre disposé entre le panneau avant (120) et le corps de support (130).

9. Unité extérieure (100, 100A) selon l'une quelconque des revendications 1 à 8, dans laquelle un corps non magnétique (8, 9) est en outre disposé entre le cadre (41) et le corps de support (130).

10. Unité extérieure (100, 100A) selon l'une quelconque des revendications 1 à 9, dans laquelle le cadre (41) est formé d'un matériau non magnétique.

11. Unité extérieure (100, 100A) selon l'une quelconque des revendications 1 à 10, dans laquelle le rotor (1) comporte un arbre (18),
dans laquelle l'unité extérieure (100, 100A) comprend en outre une lame rotative (6) fixée à l'arbre (18).

12. Climatiseur (200) comprenant :
l'unité extérieure (100, 100A) selon l'une quelconque des revendications 1 à 11 ; et
une unité intérieure (201) reliée à l'unité extérieure (100, 100A) par une conduite de réfrigérant (207).
